# EUROPEAN PATENT APPLICATION

(11) **EP 4 835 517 A1**
(43) Date of publication of application: **04.11.2026**
(21) Application number: 25173616.1
(22) Date of filing: 30.04.2025
(51) Int. Cl.: G01S 13/90

(54) **RECEIVING DATA FROM AND TRANSMITTING DATA TO AN ORBITING SYNTHETIC APERTURE RADAR SATELLITE**

(71) Applicant: Iceye Oy, 02150 Espoo (FI)
(72) Inventor: Thompson, Alan, 02150 Espoo (FI)
(74) Representative: Papula Oy

(57) **Abstract**

Using a SAR antenna on a SAR satellite, a radio frequency (RF) signal transmitted from a ground-based location on the Earth, and having data modulated thereon, is received at the SAR satellite. The RF signal is received during a period of time in which a beam of the SAR satellite overlaps the ground-based location.

## Description

### Field

The present disclosure relates to methods and systems for receiving data at an orbiting synthetic aperture radar satellite, as well as methods and systems for transmitting data to an orbiting synthetic aperture radar satellite.

### Background

Transmitting data from remote locations on Earth presents significant challenges due to the limitations of existing communication infrastructure. For example, survey vessels operating in the open ocean often find themselves far from terrestrial networks, making data transmission difficult. Similarly, remote research stations and expeditions, for example those in the high Arctic, can be located beyond the coverage range of geostationary satellites, which are typically positioned over the equator and have limited visibility at extreme latitudes.

There can be many other situations requiring transmission of data from areas not covered by existing communication networks, or with limited access to communications infrastructure. Even if other existing data transmission methods can be used, they may be limited in the amount of data that can be transmitted and/or the speed at which the data can be transmitted. It may also not be desirable or possible to use other existing communications infrastructure, for example due to security restrictions.

These constraints and limitations can result in delays or gaps in data collection and transmission, impacting scientific research, environmental monitoring, and operational decision-making.

### Summary

According to a first aspect of the disclosure, there is provided a method of receiving data using an orbiting synthetic aperture radar (SAR) satellite having a SAR antenna configured to transmit SAR pulses to the Earth, the method comprising: receiving, using the SAR antenna on the SAR satellite, a radio frequency (RF) signal transmitted from a ground-based location on the Earth and having the data modulated thereon, wherein the RF signal is received during a period of time in which a beam of the SAR satellite overlaps the ground-based location.

The method may further comprise transmitting, using the SAR antenna on the SAR satellite, the SAR pulses. Receiving the RF signal may comprise receiving the RF signal embedded within one or more echoes generated by reflection off the Earth of the SAR pulses.

The method may further comprise: generating SAR data based on the one or more echoes received at the SAR antenna; and extracting the RF signal from the SAR data.

Extracting the RF signal may comprise: downlinking the SAR data from the SAR satellite to a ground station; and processing the downlinked SAR data to extract the RF signal from the SAR data.

The ground-based location may be out of reach of all geostationary satellite communication networks.

According to a further aspect of the disclosure, there is provided a method of transmitting data, comprising: transmitting, from a ground-based location, a radio frequency (RF) signal having the data modulated thereon to an orbiting synthetic aperture radar (SAR) satellite having a SAR antenna configured to transmit, in one or more frequency bands, SAR pulses to the Earth, wherein the RF signal is transmitted in the one or more frequency bands.

The method may further comprise, prior to transmitting the RF signal, modulating the data onto the RF signal.

Transmitting the RF signal may comprise: repeatedly transmitting the RF signal during a period of time in which a beam of the SAR satellite overlaps the ground-based on location.

Transmitting the RF signal may comprise: determining that the beam of the SAR satellite overlaps the ground-based location; and in response to determining that the beam of the SAR satellite overlaps the ground-based location, transmitting the RF signal.

Determining that the beam overlaps the ground-based location may comprise: determining, based on an orbit of the SAR satellite, that the beam of the SAR satellite overlaps the ground-based location.

Transmitting the RF signal may comprise: transmitting the RF signal with a power selected such that the RF signal is detectable with respect to a noise floor of the SAR antenna.

The noise floor may be the noise floor of ground echo.

Transmitting the RF signal may comprise: detecting, at the ground-based location, at least one of the SAR pulses; and in response to detecting the at least one SAR pulse, transmitting the RF signal.

Transmitting the RF signal may comprise: detecting, at the ground-based location, at least two of the SAR pulses; and in response to detecting the at least two SAR pulses, transmitting the RF signal.

Transmitting the RF signal may further comprise: transmitting the RF signal such that the RF signal coincides with at least one time period when the at least one SAR pulse is detected.

The at least one SAR pulse may comprise timing information encoded therein. Transmitting the RF signal may further comprise: decoding the timing information; and transmitting the RF signal based on the timing information.

Transmitting the RF signal may comprise: transmitting the RF signal with a power selected such that the RF signal is detectable with respect to one or more echoes of the SAR pulses.

Transmitting the RF signal may comprise: transmitting the RF signal with no more than 10 Watts of radiated power.

Transmitting the RF signal may comprise: transmitting the RF signal in a bandwidth that is a subset of a bandwidth in which the SAR antenna is configured to transmit the SAR pulses.

The subset may be selected from any one of the following: 432-438 MHz; 1,215-1,300 MHz; 3,100-3,300 MHz; 5,250-5,570 MHz; 9,200-10,400 MHz; and 13.25-13.75 GHz; and 17.2-17.3 GHz.

According to a further aspect of the disclosure, there is provided a system for transmitting data, comprising: a ground-based radio frequency (RF) transmitter; and one or more processors configured to control the RF transmitter to transmit an RF signal having the data modulated thereon to an orbiting synthetic aperture radar (SAR) satellite having a SAR antenna configured to transmit, in one or more frequency bands, SAR pulses to the Earth, wherein the one or more processors are further configured to control the transmitter to transmit the RF signal in the one or more frequency bands.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of a synthetic aperture radar (SAR) satellite orbiting the Earth, according to an embodiment of the disclosure;
FIG. 2 is a schematic diagram of a ground station relaying SAR image data from a SAR satellite to a SAR processing station, according to an embodiment of the disclosure;
FIG. 3 is a schematic diagram of a computing device configured to process and generate SAR image data, according to an embodiment of the disclosure;
FIG. 4 is a schematic diagram of a ground transmitter, in a first mode of operation, transmitting data to an orbiting SAR satellite, according to an embodiment of the disclosure;
FIG. 5 is a schematic diagram of a swath of an orbiting SAR satellite overlapping a ground-based location, according to an embodiment of the disclosure
FIG. 6 is a schematic diagram of a ground transmitter, in a second mode of operation, transmitting data to an orbiting SAR satellite, according to an embodiment of the disclosure; and
FIG. 7 is a schematic timing diagram showing different transmit and receive windows according to different schemes used to transmit an RF signal to a SAR satellite, according to an embodiment of the disclosure.

### Detailed Description

The present disclosure seeks to provide novel methods and systems for receiving data at, and transmitting data to, an orbiting synthetic aperture radar satellite. While various embodiments of the disclosure are described below, the disclosure is not limited to these embodiments, and variations of these embodiments may well fall within the scope of the disclosure which is to be limited only by the appended claims.

Synthetic aperture radar (SAR) is a type of imaging technology that can be used for a variety of applications such as Earth observation, mapping, object tracking, change detection (e.g., in glaciers), natural catastrophe monitoring, and many others. SAR images are a type of image created by transmitting radar pulses, receiving the reflected and scattered return echoes, and processing the return echoes in order to form the image. This is in contrast to optical imagery, a passive technology wherein images are captured by receiving light reflected or originating from an object. SAR technology, on the other hand, is an active rather than a passive technology since it relies on transmitting radar pulses instead of relying on sunlight or other light sources. A significant advantage of SAR technology over optical imagery is that SAR technology can image at night as well as through clouds and other adverse weather conditions. However, forming an image using SAR technology is generally more complex and requires significant signal processing of the returned echoes in order to generate the image.

More particularly, SAR images are acquired from a moving transceiver, such as a transceiver that comprises part of a satellite or a high-altitude aircraft. In a conventional imaging radar, meaning a real aperture radar without pulse compression, the spatial resolution of an image generated by measuring reflections of a radar signal is directly proportional to the time duration of the transmitted radar pulse and inversely proportional to the along-track dimension of the antenna used to transmit and receive the radar signal. In other words, the longer the antenna, the finer the along-track resolution. This means that the length of the antenna that would be required to capture high-resolution images using conventional radar is often impractical, particularly for airborne use and especially for spaceborne use.

In contrast, SAR images are captured using a "synthetic aperture". A smaller and consequently more practical antenna is used on a moving platform to make a series of measurements of reflected radar signals, and those measurements are combined to simulate a much larger antenna. This is achieved by using a phase-coherent radar and exploiting the Doppler effect created by the moving SAR platform. Consequently, the resolution of a SAR image corresponds to the resolution of a conventional radar image captured using an antenna much longer than the one used to capture the SAR image.

As described above, transmitting data from locations (remote or otherwise) on Earth can present significant challenges due to the limitations of existing communication infrastructure or due to restricted availability of existing communications infrastructure. Therefore, according to embodiments of the disclosure, the SAR antenna of an orbiting SAR satellite may be used to receive a radio frequency (RF) data transmission from a ground-based location on Earth. For example, digitized data may modulated onto an RF carrier signal which is transmitted from the ground to a SAR satellite. Because SAR satellite networks generally provide full global coverage, data may be transmitted to a SAR satellite irrespective of the location from which the data is sent. In addition, because of the relatively large gain afforded by a SAR satellite's SAR antenna, a low-power ground-based RF transmitter with a simple, small antenna may be used to transmit the data within the passband of the SAR satellite's SAR antenna. The SAR satellite receives the data which may then be downlinked to a ground station in the usual manner or else sent to another ground-based receiver. According to some embodiments in which the SAR satellite is performing a SAR imaging operation when the SAR antenna receives the RF signal, the data may be embedded within the radar echo data. The embedded signal from the ground transmitter may then be filtered out of the raw radar echo data and forwarded via one or more ground links to an intended recipient.

Embodiments of the disclosure may therefore allow for the relaying of relatively large amounts of data from remote locations on Earth, such as from survey vessels operating in the open ocean or from research stations and expeditions in the high Arctic, to any location on Earth serviced by terrestrial communication lines. The signal route may therefore extend from the ground transmitter to the SAR satellite, to a satellite ground station, and then via terrestrial links to the recipient. Relatively large volumes of data may therefore be transmitted from such remote locations where no other transmission method is available.

Embodiments of the disclosure may have particular application in a variety of different scenarios. For example, assume there is an Area of Interest (AOI) on the scale of tens of kilometers to 100 kilometers in each dimension on the Earth's surface. This AOI could be of interest due to a natural disaster such as a flood, fire, or earthquake, or it could be of interest due to a search and rescue operation. Assume also that a team has been dispatched to the AOI so that its members are physically located within the AOI. A requirement may be to perform very low-latency imaging of the AOI using a SAR satellite, transmission of these images to the team in the field, re-tasking of the imaging based on updated information (e.g., image a new location in the AOI, change a resolution of the images, perform additional imaging of the same location), and communication of a large volume of information (such as ground truth images) from the team in the field back to headquarters. In such a case, if the large volume of information cannot be sent to headquarters using a more traditional geostationary satellite network, then the team may transmit the data to an orbiting SAR satellite instead, using any of the methods described herein. For example, the team may transmit the data to the same SAR satellite that performed the imaging of the AOI. Communication of the data to the SAR satellite may be possible using a small device (such as a handheld device, such as a mobile device, or a device transportable in a backpack).

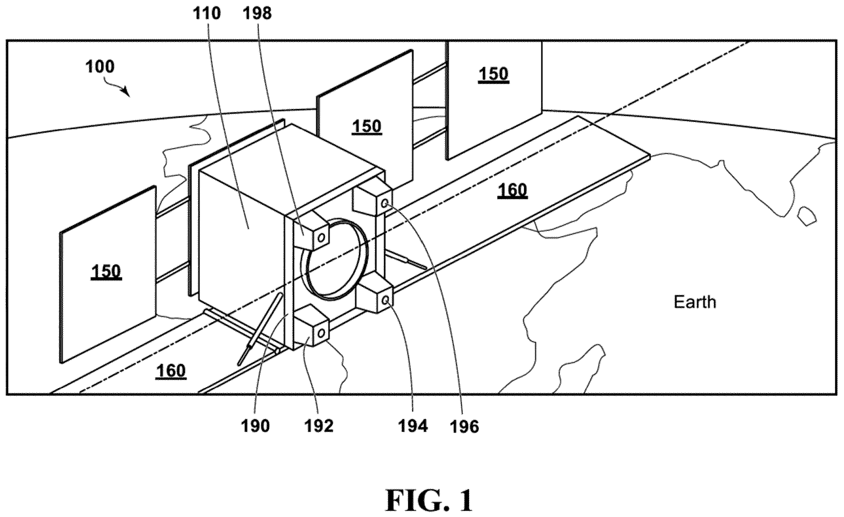

FIG. 1 depicts an exemplary SAR satellite 100 in orbit around the Earth of the kind which may be used to receive an RF signal with data modulated thereon, as described herein. Satellite 100 comprises a body 110 which may be referred to in the art as a "bus" since it may house or support so-called bus components of a satellite. Body 110 may additionally house one or more batteries. Body 110 may be partially enclosed, for example to house and protect components. A housing may provide surfaces on which components may be mounted. In the example of FIG. 1, a solar panel is mounted on one rectangular surface of body 110 and additional solar panels 150 may be attached to this solar panel by struts.

Satellite 100 comprises a radar antenna array 160 in the form of a generally planar structure extending from bus 110 in two opposing directions to provide two "wings". The structure comprising wings 160 is shown to be mounted on or adjacent to a rectangular surface of body 110. Body 110 and wings 160 of satellite 100 may be collectively referred to as the spacecraft frame. Antenna array 160 together with transmitters and receivers, data storage, a control computer,and a power distribution system (not shown) collectively form an image acquisition apparatus of satellite 100.

As described above, in a SAR system, antenna array 160 is operated to transmit radar signals to the Earth and receive returning echoes or reflections of these signals. By recording the echoes, an image of the Earth's surface can be constructed from the data using the length of time taken for the echo to return, the amplitude of the radar return, and optionally the phase information that is included within the radar return. Further location information is obtained from the frequency of the radar return which is shifted due to the Doppler effect as a result of the motion of satellite 100 relative to the Earth.

Satellite 100 is provided with a propulsion system 190 for manoeuvring satellite 100 with a generated thrust. Propulsion system 190 comprises a plurality of thrusters 192, 194, 196, 198 that produce thrust for manoeuvring satellite 100 when required, for example to position satellite 100 onto a different orbital track. Thrusters 192, 194, 196, 198 shown in FIG. 1 are positioned at the corners of one side of body 110 and may be equally spaced apart. However, in other embodiments, propulsion system 190 may have a different configuration.

In some embodiments, satellite 100 may be orbiting Earth in a low-earth orbit. A low-earth orbit may have an altitude between 160 kilometres and 1,000 kilometres above the surface of the Earth. Examples of Earth-observation satellites operating SAR payloads can accordingly have orbits with an altitude of between 450 kilometres and 850 kilometres above the Earth. In one particular example, a SAR satellite may have an orbit that is approximately 550 kilometres above the Earth's surface. At an orbit of 550 kilometres above the Earth, the satellite may be effectively traversing the ground at approximately 7 kilometres per second, or 27,000 kilometres per hour. Most satellites in such an orbit will traverse the Earth at a speed that is in the range of 6.5 kilometres per second.

As a SAR satellite operates its SAR payload and receives radar returns, it accumulates raw "SAR data". Raw SAR data generally comprises the recorded radar signals as they are received by the SAR sensor and after having undergone preprocessing steps such as filtering, demodulation to baseband, and digitization. These signals are typically represented as complex-valued numbers, where each complex value consists of two components: the in-phase (I) component and the quadrature (Q) component. SAR data is typically received and processed in I and Q channels, and therefore it is traditional to represent SAR data in this form. These components correspond to the real and imaginary parts of the complex number and contain the information necessary to derive the amplitude and phase of the received radar signal. In order to construct an image corresponding to the SAR data, the data must be processed. While in theory the data may be processed by any suitable computer processor, even a computer processor onboard the satellite, it is more typical for the raw SAR data to be first transmitted or downlinked from the SAR satellite to a ground station on the Earth's surface. The data can be downlinked whenever the SAR satellite has line of sight to the ground station. According to some embodiments, the data can be relayed to another satellite first, such as another SAR satellite, a LEO (Low Earth Orbit) communications satellite, or even a GEO (geostationary) communications satellite, and then eventually to ground. The downlinked SAR data is then typically relayed to a SAR processing station which performs the necessary processing of the SAR data, as now described in further detail.

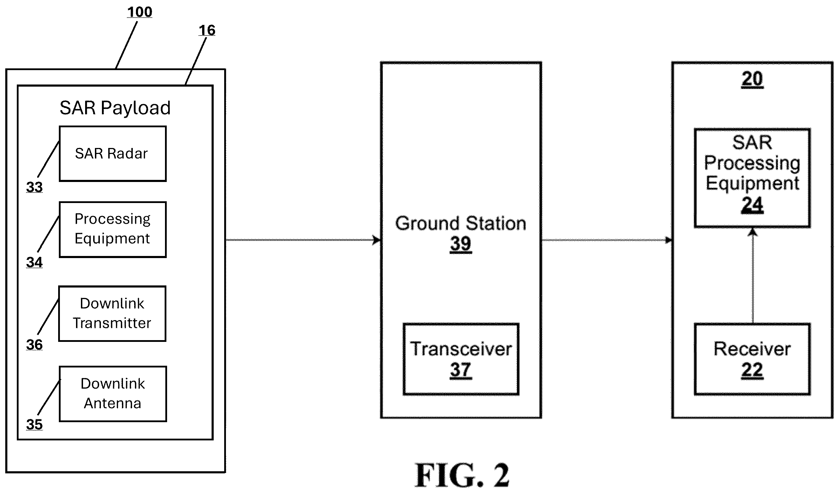

In particular, referring to FIG. 2, there is shown a schematic diagram of hardware components onboard satellite 100 being used to allow satellite 100 to communicate with a SAR processing station 20 on the Earth's surface. SAR processing station 20 houses the computer hardware components that are used to process the SAR data and generate the SAR images. Typically, satellite 100 will first downlink the SAR data to a ground station 39, and ground station 39 will relay (using a wired or wireless communication link) the downlinked SAR data to SAR processing station 20. However, it is possible, according to some embodiments, for ground station 39 to process the SAR data, in which case ground station 39 effectively performs the function of SAR processing station 20. SAR processing station 20 can be an office, an operations station, or any other location comprising any computer device (such as a laptop) capable of processing the SAR data. The SAR processing may also be carried out using cloud computing, for example through the use of multiple processors operating in parallel, in which case SAR processing station 20 is the location at which the SAR data is received and passed to the cloud.

Generally, satellite 100 includes a SAR payload 16 which comprises a SAR radar 33 (e.g., antenna array 160) including a transmitter and a receiver, storage, satellite processing equipment 34, a downlink transmitter 36, and a downlink antenna 35. Meanwhile, SAR processing station 20 includes a receiver 22 (which instead of being an RF-based receiver may comprise an FTP link or other internet link) and SAR processing equipment 24. Satellite processing equipment 34 and SAR processing equipment 24 comprise suitable computer processors, comprising circuitry, and computer-readable media configured to perform various data processing functions. Ground station 39 includes a transceiver 37 (or a separate transmitter and receiver) for relaying the SAR data from satellite 100 to SAR processing station 20. For example, relaying the SAR data from ground station 39 to SAR processing station 20 can be performed through a wired or wireless terrestrial network. According to some embodiments, if satellite 100 is not in direct communication with ground station 39, the SAR data can be relayed to ground station 39 via another satellite or an aircraft.

During operation, data captured by SAR radar 33 is passed to satellite processing equipment 34 for preprocessing (which may include, for example, basic compression/encoding/packaging). Following preprocessing, the pre-processed data is passed to downlink transmitter 36 which transmits or otherwise downlinks, using downlink antenna 35, the data to transceiver 37 of ground station 39. Transceiver 37 of ground station 39 then relays the SAR data to receiver 22 of SAR processing station 20. Receiver 22 passes the data to SAR processing equipment 24 which processes the data.

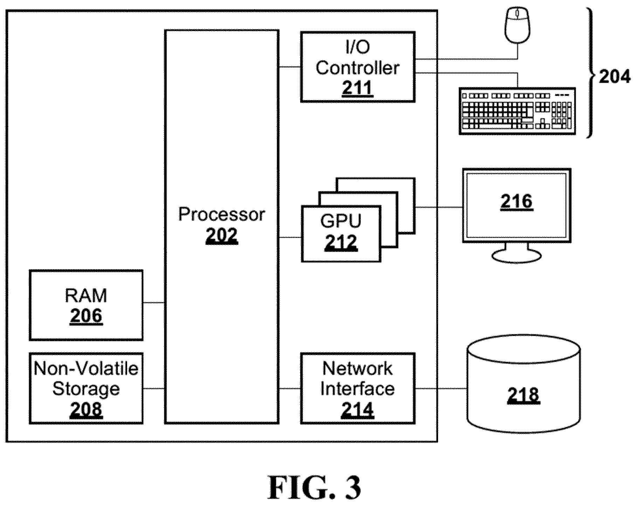

Turning to FIG. 3, there is shown an example of hardware components in SAR processing equipment 24. In particular, a computer system 200 comprises a processor 202 that controls computer system's 200 overall operation. Processor 202 is communicatively coupled to and controls several subsystems. These subsystems comprise an input/output ("I/O") controller 211, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to perform one or more operations defined by the computer program code. Additionally or alternatively, multiple ones of computer systems 200 may be networked together and collectively perform that method using distributed computing.

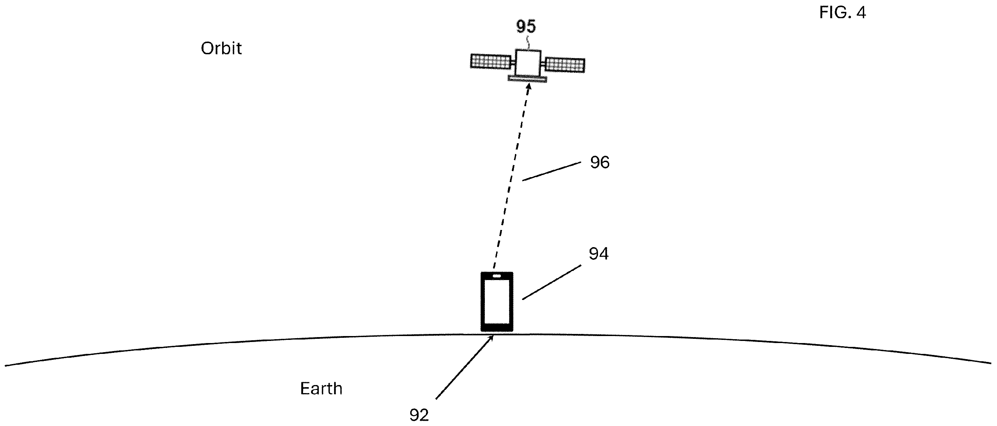

Turning now to FIG. 4, there is shown a schematic diagram of a ground transmitter 94 being used, in a first mode of operation, to transmit an RF signal 96 to an orbiting SAR satellite 95, according to embodiments of the disclosure. Transmitter 94 is located at a ground-based location 92 (for example, a remote location on Earth). As known in the art, the data that is intended to be transmitted to SAR satellite 95 is first modulated onto an RF carrier signal. For example, any one of various modulation schemes may be used to encode the digitized data into the RF carrier signal. RF signal 96 is then transmitted using ground transmitter 94 to SAR satellite 95, where the SAR antenna of SAR satellite 95 receives RF signal 96.

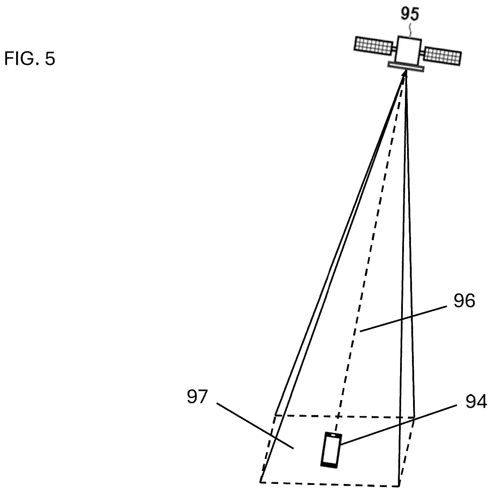

According to this first mode of operation, SAR satellite 95 may operate in a receive-only mode. When in the receive-only mode, ground transmitter 94 may transmit RF signal 96 just before or when the orbit of SAR satellite 95 has brought SAR satellite 95 to a position such that SAR satellite 95 may detect the transmitted RF signal 96. Generally, SAR satellite 95 is in a position to receive RF signal 96 when a beam or swath 97 of SAR satellite 95 overlaps ground-based location 92, as can be seen in FIG. 5. In order to determine when SAR satellite 95 is in a position suitable to receive RF signal 96, the position of SAR satellite 95 along its orbit may be monitored, and an instruction (e.g., from a suitable computer controller) may be sent to ground transmitter 94 to transmit RF signal 96 when SAR satellite 95 is in position to detect the transmitted RF signal 96. When operating according to this mode, it can be assumed that SAR satellite 95 is receiving at all times and that as a result there is no SAR echo to compete with RF signal 96, unlike in the second mode described below. Therefore, there is only a need that the transmission level of RF signal 96, when received at the SAR receiver, be above the noise floor of the SAR receiver on SAR satellite 95.

According to some embodiments, SAR satellite 95 may point the beam of the SAR radar towards a target (e.g., ground-based location 92), for example by using a steerable phased antenna array. Furthermore, the beam can be controlled to remain pointing at the target for an extended period of time (e.g., using spotlight mode) to prolong the window of opportunity for transmitting data from transmitter 94 to SAR satellite 95.

The ability to point the beam of the SAR radar, and in some cases to remain pointing at a target for an extended period of time, are functions that may already be configured on the SAR satellite for imaging purposes but that can also be advantageously used for transmitting data to the SAR satellite using the SAR beam. A further advantage of synergistically using the SAR satellite's imaging capabilities for data transfer is that the SAR antenna is relatively large (due to the antenna aperture size required for imaging) compared to typical communications antennas, and as a result a relatively large amount of data can be transferred by using the SAR antenna for data transfer. The relatively large and highly-sensitive SAR antenna also enables the possible use of a smaller low-powered transmitter on the ground to transfer data or instructions, which may be important for a number of applications.

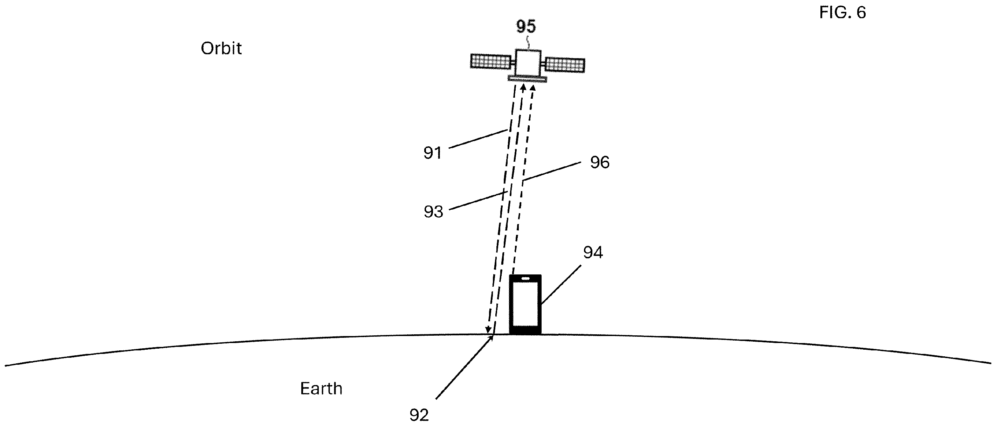

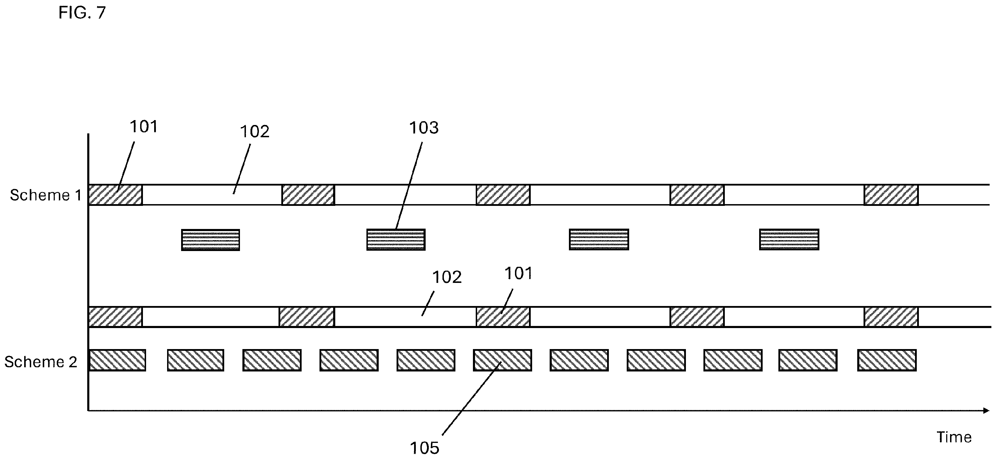

According to an alternative, second mode of operation, ground transmitter 94 may be configured to transmit RF signal 96 when SAR satellite 95 is performing its usual SAR imaging function, as can be seen schematically in FIG. 6. In particular, SAR satellite 95 is shown transmitting SAR pulses 91 toward ground-based location 92, and radar echoes 93 of SAR pulses 91 reflect from ground-based location 92 and are received at SAR satellite 95. Although not shown in FIG. 6, in reality SAR pulses 91 are interleaved with radar echoes 93, as can be seen in FIG. 7. Unlike the first mode described above, when transmitting RF signal 94 in conjunction with SAR satellite 95 performing SAR imaging, the transmission level of RF signal 96 should be selected to be detectable above the level of radar echoes 93. In other words, in order to be detectable, RF signal 94 should be transmitted with sufficient power to be detectable above the level of radar echoes 93. In addition, ground transmitter 94 may adopt a scheme to avoid signal loss during transmission of SAR pulses 91 by SAR satellite 95. One such scheme may involve ground transmitter 94 detecting SAR pulses 91 and transmitting during the time periods when SAR pulses 91 are incident on the ground (in such a case, transmitter 94 may be configured as a receiver as well as a transmitter and so may be referred to as ground transceiver 94). Another such scheme may involve ground transmitter 94 using time-domain redundancy to avoid lost data due to overlaps when the transmissions of ground transmitter 94 are received at SAR satellite 95 and when SAR satellite 95 is transmitting. When using time-domain redundancy, ground transmitter 94 may repeatedly and periodically transmit RF signal 94 to SAR satellite 95 to ensure that at least one copy of all the signal packets arrives at satellite 95 when satellite 95 is not transmitting.

When operating according to the mode shown in FIG. 6, SAR satellite 95 may transmit SAR pulses 91 as per a usual SAR spotlight operation, and ground transceiver 94 may detect SAR pulses 91 and thus detect that SAR satellite 95 is in position to receive RF signal 96. According to some embodiments, SAR pulses 91 transmitted by SAR satellite 95 may be encoded with additional information to alert transceiver 94 that SAR satellite 95 is ready to receive transmissions from ground transceiver 94. In such a case, ground transceiver 94 may delay sending RF signal 96 until ground transceiver 94 determines that SAR satellite 95 is ready to receive transmissions from ground transceiver 94. Optionally, SAR satellite 95 may transmit a "length of window" signal encoded in SAR pulses 91 that can be read by ground transceiver 94. The length of window signal may indicate to ground transceiver 94 the time window during which ground transceiver 94 should transmit data to SAR satellite 95.

In response to detecting a SAR pulses 91, ground transceiver 94 may synchronize its transmissions with the pulse repetition frequency (PRF) used by SAR satellite 95. In other words, transmissions from ground transceiver 94 may be timed to coincide with SAR pulses 91 reflecting off the ground so that **RF** signal 96 is received at SAR satellite 95 during the satellite's receive window and embedded within radar echoes 93. Alternatively, as described above, time-domain redundancy may be used.

Ground transmitter 94 may transmit RF signal 96 in a frequency band that is a subset of the radar band used by SAR satellite 95. For example, ground transmitter 94 may transmit RF signal 96 in a portion of any one of the L-band, P-band, S-band, C-band, X-band, Kᵤ band, and Kₐ band that is being used by the SAR satellite's radar for imaging purposes. In this context, the "used" band may refer to the actual band of the SAR pulse (in which case a subset of the band may be used for the ground-based data transmissions). In addition, the "used" band may refer to the sampled bandwidth which is slightly greater than the actual band of the SAR pulse, and in such a case the subset of the band may include the additional sampled bandwidth outside of the pulse's band to avoid RF interference.

Advantageously, by transmitting an RF signal using a SAR satellite's imaging band as opposed to a band reserved for communications, the ground-based transmitter may effectively piggyback onto a band that is being used for imaging. Regulatory bodies often place restrictions on the particular bandwidths that may be used for communications, and so transmitting an RF signal using an imaging band as opposed to a band reserved for communications provides an efficient and effective means of transmitting data from a ground-based location to an orbiting SAR satellite in cases where the usual use of a communication band is not possible and/or not desired. For example, the RF signal may be transmitted in any of the following imaging bands: 432-438 MHz; 1,215-1,300 MHz; 3,100-3,300 MHz; 5,250-5,570 MHz; 9,200-10,400 MHz; and 13.25-13.75 GHz; and 17.2-17.3 GHz.

FIG. 7 shows an example schematic timing diagram illustrating different transmit and receive windows according to different schemes that may be used to transmit the RF signal to the SAR satellite. According to Scheme 1, the ground transceiver detects SAR pulses that are transmitted during the SAR satellite's transmit windows 101. Transmit windows 101 are spaced apart by respective receive windows 102 during which the radar echoes of SAR pulses are detected by the SAR satellite's SAR antenna. In reality, because of the time taken for a SAR pulse to travel to the Earth and for its reflection to be received at the satellite, each radar echo that is received at the satellite corresponds to a pulse that was transmitted a number of cycles earlier (based on the pulse repetition frequency of the satellite). As can be seen, according to this scheme, the RF signal is transmitted during transmit windows that timed such that the transmissions coincide with receive windows 102, thereby ensuring that the SAR satellite's SAR antenna will receive the RF signal at the same time as a radar echo. In Scheme 1, element 103 refers to a period of time during which the SAR satellite's SAR antenna receives the RF signal.

According to Scheme 1, in order to determine when to transmit the RF signal so that it arrives at the SAR satellite during a receive window 102, the ground-based transmitter should detect at least two SAR pulses hitting the ground, thereby allowing the pulse length and the PRF to be determined. Once the pulse length and PRF are known, the transmitter can determine when to transmit the RF signal so that it arrives at the SAR satellite during a receive window 102.

As can also be seen in FIG. 7, according to Scheme 2, the RF signal may be transmitted using time-domain redundancy. As a result, while the transmitter's transmissions are received during windows 105 that may overlap with portions of transmit windows 101 during which the SAR satellite's SAR antenna is transmitting SAR pulses (and so is unable to detect the RF signal), in the aggregate the entire RF signal is received at the SAR satellite. Indeed, in the example shown in FIG. 7, there exist a couple instances in which windows 105 wholly overlap with corresponding receive windows 102 of the SAR satellite.

According to some embodiments, the SAR satellite may operate in any of different modes for transmitting information to the ground-based transceiver. For example, in one mode (as described above), one or more repeating signals may be encoded redundantly on every SAR pulse. For example, each signal may indicate to the transceiver that the SAR satellite is ready to receive data from the transceiver, and the signal may additionally include timing information for transmitting the data to the satellite. In another mode, the satellite may transmit a large file (such as a processed SAR image) over multiple pulses, and the transceiver may send data transmissions to the satellite wherein the transmissions are timed to be received at the satellite during the satellite's receive windows. According to some embodiments, the large file may be transmitted to the ground-based transceiver over multiple passes of the satellite.

According to the following example, transmission of an RF signal to a SAR satellite may be performed at the following uplink rate. Assume a 20-second imaging acquisition during which the SAR satellite is performing spotlight imaging. Assume that the duty cycle of the satellite's SAR pulses is 20% with a PRF of 5,000 Hz. Each pulse length is therefore 40 µs. We now use the Shannon Hartley Theorem, $C = B {log}_{2} \left(1+\frac{S}{N}\right)$, where C is the channel rate, B is the bandwidth, and S/N is the signal-to-noise ratio. Assuming that B is 600 MHz and that S/N is 1 (which is representative of a relatively low radar echo level), then in theory 600 Mbits/s may be transmitted when the channel is available.

Practically speaking, link margin (the additional power available in a communication system beyond what is required for reliable data transmission) will be required. Furthermore, in this case the noise that should be taken into account is the radar clutter and radar thermal noise, both of which are variable. The clutter varies depending on the terrain, and the reflected SAR signal levels are affected by antenna patterns, which affect how thermal noise in the satellite receiver maps to a transmitter signal level from the ground.

Let us assume that we are aiming for C = 150 Mbits/sec, S/N = 0 dB, and that a 6 dB margin is sufficient. The required calculation is therefore to determine what effective isotropic radiated power (EIRP) from the ground transmitter is needed for S/N = 0 dB. In general, we assume that the ground clutter is the dominating noise source, rather than satellite receiver thermal noise. An extreme level of ground clutter is 0 dB. Thus, what is needed is that the ground transmitter transmit with an EIRP that is equivalent to the satellite's incident EIRP on the ground. Generally, with the above assumptions, it can be shown that the transmitter should have between 1 and 10 Watts of total radiated power. With this power, over 100 Mbits/s may be transmitted in the presence of clutter interference.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of receiving data using an orbiting synthetic aperture radar (SAR) satellite having a SAR antenna configured to transmit SAR pulses to the Earth, the method comprising:
receiving, using the SAR antenna on the SAR satellite, a radio frequency (RF) signal transmitted from a ground-based location on the Earth and having the data modulated thereon,
wherein the **RF** signal is received during a period of time in which a beam of the SAR satellite overlaps the ground-based location.

2. The method of claim 1, wherein:
the method further comprises transmitting, using the SAR antenna on the SAR satellite, the SAR pulses; and
receiving the **RF** signal comprises receiving the **RF** signal embedded within one or more echoes generated by reflection off the Earth of the SAR pulses, and optionally wherein the method further comprises:
generating SAR data based on the one or more echoes received at the SAR antenna; and
extracting the RF signal from the SAR data, and optionally wherein:
extracting the RF signal comprises:
downlinking the SAR data from the SAR satellite to a ground station; and
processing the downlinked SAR data to extract the RF signal from the SAR data.

3. The method of claim 1 or 2, wherein the ground-based location is out of reach of all geostationary satellite communication networks.

4. A method of transmitting data, comprising:
transmitting, from a ground-based location, a radio frequency (RF) signal having the data modulated thereon to an orbiting synthetic aperture radar (SAR) satellite having a SAR antenna configured to transmit, in one or more frequency bands, SAR pulses to the Earth,
wherein the RF signal is transmitted in the one or more frequency bands.

5. The method of claim 4, further comprising:
prior to transmitting the RF signal, modulating the data onto the RF signal.

6. The method of claim 4 or 5, wherein transmitting the RF signal comprises:
repeatedly transmitting the RF signal during a period of time in which a beam of the SAR satellite overlaps the ground-based on location.

7. The method of any one of claims 4-6, wherein transmitting the RF signal comprises:
determining that the beam of the SAR satellite overlaps the ground-based location; and
in response to determining that the beam of the SAR satellite overlaps the ground-based location, transmitting the RF signal, and optionally wherein:
determining that the beam overlaps the ground-based location comprises determining, based on an orbit of the SAR satellite, that the beam of the SAR satellite overlaps the ground-based location.

8. The method of any one of claims 4-7, wherein transmitting the RF signal comprises:
transmitting the RF signal with a power selected such that the RF signal is detectable with respect to a noise floor of the SAR antenna, and optionally wherein the noise floor is the noise floor of ground echo.

9. The method of any one of claims 4-8, wherein transmitting the RF signal comprises:
detecting, at the ground-based location, at least one of the SAR pulses; and
in response to detecting the at least one SAR pulse, transmitting the RF signal.

10. The method of claim 9, wherein transmitting the RF signal comprises:
detecting, at the ground-based location, at least two of the SAR pulses; and
in response to detecting the at least two SAR pulses, transmitting the RF signal.

11. The method of claim 9 or 10, wherein transmitting the RF signal further comprises:
transmitting the RF signal such that the RF signal coincides with at least one time period when the at least one SAR pulse is detected.

12. The method of any one of claims 9-11, wherein:
the at least one SAR pulse comprises timing information encoded therein; and
transmitting the RF signal further comprises:
decoding the timing information; and
transmitting the RF signal based on the timing information.

13. The method of any one of claims 4-12, wherein transmitting the RF signal comprises:
transmitting the RF signal with a power selected such that the RF signal is detectable with respect to one or more echoes of the SAR pulses.

14. The method of any one of claims 4-13, wherein transmitting the RF signal comprises:
transmitting the RF signal with no more than 10 Watts of radiated power.

15. The method of any one of claims 4-14, wherein transmitting the RF signal comprises:
transmitting the RF signal in a bandwidth that is a subset of a bandwidth in which the SAR antenna is configured to transmit the SAR pulses, and optionally wherein:
the subset is selected from any one of the following: 432-438 MHz; 1,215-1,300 MHz; 3,100-3,300 MHz; 5,250-5,570 MHz; 9,200-10,400 MHz; and 13.25-13.75 GHz; and 17.2-17.3 GHz.

16. A system for transmitting data, comprising:
a ground-based radio frequency (RF) transmitter; and
one or more processors configured to control the RF transmitter to transmit an RF signal having the data modulated thereon to an orbiting synthetic aperture radar (SAR) satellite having a SAR antenna configured to transmit, in one or more frequency bands, SAR pulses to the Earth,
wherein the one or more processors are further configured to control the transmitter to transmit the RF signal in the one or more frequency bands.
